# EUROPÄISCHE PATENTSCHRIFT

(11) **EP 2 335 886 B1**
(45) Veröffentlichungstag und Bekanntmachung des Hinweises auf die Patenterteilung: **17.08.2016**
(21) Anmeldenummer: 09015764.5
(22) Anmeldetag: 19.12.2009
(51) Int. Cl.: B25J 21/02, C12M 1/00, C12M 1/04, G21F 7/053

(54) **Anordnung zur Verarbeitung von kontaminationsgefährdenden Stoffen**
Assembly for processing materials at risk of contamination
Agencement de traitement de matières présentant un danger de contamination

(43) Veröffentlichungstag der Anmeldung: 22.06.2011
(73) Patentinhaber: Harro Höfliger Verpackungsmaschinen GmbH, 71573 Allmersbach im Tal (DE)
(72) Erfinder: Römer, Harald, 21465 Reinbek (DE)
(74) Vertreter: Wasmuth, Rolf

(56) Entgegenhaltungen:
- WO-A1-96/11092
- WO-A2-2005/000367
- US-A1- 2003 021 723
- US-A1- 2007 298 701
- US-A1- 2009 047 173
- US-B1- 6 517 429

## Beschreibung

Die Erfindung betrifft eine Anordnung zur Verarbeitung von kontaminationsgefährdenden Stoffen der im Oberbegriff des Anspruchs 1 angegebenen Gattung sowie eine Manipulationseinheit zur Verwendung in einer solchen Anordnung.

Bei der Produktion und Verarbeitung vor allem von toxischen und hochwirksamen, niedrig dosierten pharmazeutischen Wirkstoffpräparaten und anderen kontaminationsgefährdenden Stoffen ist ein Schutz des Bedienpersonals vor Kontamination mit dem jeweiligen Stoff zu beachten.

Eine Möglichkeit zur Ausgestaltung des Bedienerschutzes besteht darin, dass der betreffende Mitarbeiter in einem sogenannten Vollschutz arbeitet. Dieser Vollschutz besteht aus einem positiv belüfteten geschlossenen Anzug, in dessen Innenraum ein Überdruck herrscht. Damit wird sichergestellt, dass keine gefährlichen Substanzen an den Mitarbeiter bzw. dessen Atemluft gelangen können.

Verbreitet finden jedoch Anordnungen zur Verarbeitung der vorgenannten kontaminationsgefährdenden Stoffe Verwendung, bei denen die entsprechende Verarbeitungseinrichtung für solche Stoffe im Innenraum eines geschlossenen Gehäuses angeordnet ist. Derartige Anordnungen werden auch als Containment-Maschinen bezeichnet. Das geschlossene Gehäuse schützt das außen stehende Bedienpersonal, weshalb eine dichte Ausführung angestrebt wird. Wesentliche Hindernisse für eine tatsächlich dichte Ausführung sind aber Wellen und Achsen, die mit Antrieben außerhalb des isolierten Bereichs verbunden sind. Sofern für die Verarbeitungseinheiten bewegungsübertragende Einrichtungen wie rotierende Wellen oder dgl. zum Einsatz kommen, die einen Antrieb außerhalb des Innenraums aufweisen, ist eine vollständige Abdichtung schwierig und aufwändig, weshalb der Innenraum gegenüber der Umgebung mit einem leichten Unterdruck beaufschlagt wird. Hierdurch wird erreicht, dass durch eventuell vorhandene Undichtigkeiten zwar Umgebungsluft von außen in den Innenraum eindringen, die sensiblen, ggf. auch gefährlichen Stoffe jedoch in umgekehrter Richtung nicht gegen den eintretenden Luftstrom nach außen dringen können.

Bei derartigen Containment-Maschinen muss die Möglichkeit bestehen, dass das Bedienpersonal bedarfsweise Zugriff auf den Innenraum und die darin angeordnete Verarbeitungseinrichtung hat, ohne selbst der Gefahr einer Kontamination ausgesetzt zu sein. Ein derartiger Zugriff kann beispielsweise bei allfälligen Korrektureingriffen im laufenden Verarbeitungsprozess oder aber bei einem Reinigungsvorgang im Anschluss an einen abgeschlossenen Verarbeitungsprozess erforderlich werden.

Hierzu weisen die entsprechenden Anordnungen Handhabungseinrichtungen für den benutzerseitigen Zugriff auf den Innenraum und die darin angeordnete Verarbeitungseinrichtung auf. Solche Handhabungseinrichtungen können beispielsweise sogenannte Handschuheingriffe sowie eine Druckluft- und Spülwasserzufuhr umfassen. Mittels der Handschuheingriffe hat das Bedienpersonal die Möglichkeit, verschiedene Tätigkeiten im Innenraum des geschlossenen Gehäuses auszuführen, ohne das Gehäuse öffnen zu müssen.

Beispielsweise beim Abmessen und Abfüllen der vorgenannten Stoffe kann niemals sichergestellt werden, dass die bereitgestellten Stoffe zu 100 % in ihre vorgesehenen Behälter gelangen. Vielmehr findet regelmäßig auch eine Ablagerung solcher Stoffe an der Verarbeitungseinrichtung sowie an den Innenwänden des Gehäuses statt. Auch das Luftvolumen im Gehäuse ist nicht frei von den genannten Stoffen. Im Anschluss an einen Verarbeitungsvorgang muss deshalb eine Reinigung der Verarbeitungseinrichtung und des Gehäuseinnenraums vorgenommen werden, bevor das Gehäuse gefahrlos geöffnet werden kann. Hierzu greift das Bedienpersonal mit den Händen in den Handschuheingriff und betätigt im Innenraum angeordnete Spül- bzw. Ausblaseinrichtungen.

Im praktischen Betrieb haben sich bei derartigen Anordnungen verschiedene Schwierigkeiten herausgestellt. Jede einzelne der vorgenannten Verarbeitungseinrichtung muss mit Zuführleitungen für Spülwasser und Druckluft sowie mit Abwasser- und Abluftleitungen versehen sein, die im laufenden Produktionsprozess hermetisch vom Innenraum des Gehäuses abgeschlossen sein müssen, um eine Kontamination des zu verarbeitenden Stoffes zu vermeiden. Die hierzu erforderlichen Vorkehrungen sind sehr aufwendig und kostenintensiv. Handschuheingriffe, Druckluft- und Spülwasserzufuhr müssen permanent an Ort und stelle sein, um bei Bedarf genutzt werden zu können. Hierbei nehmen sie entsprechenden Raum ein, was die an sich schon beengten Raumverhältnisse in einer Containment-Maschine zusätzlich nachteilig beeinflusst. Außerdem bieten die genannten Handhabungseinrichtungen zusätzliche Flächen, an denen sich die zu verarbeitenden Stoffe in unerwünschter Weise absetzen können, was die Reinigung erschwert.

Als besonders problematisch hat sich die Verarbeitung von pulverförmigen Stoffen herausgestellt, die je nach Beschaffenheit zu einer ausgeprägten Haftfähigkeit neigen und deshalb schwer von den zu reinigenden Oberflächen entfernbar sind. Dies gilt umso mehr, wenn die betreffenden pulverförmigen Stoffe wasserabweisende Eigenschaften aufweisen, so dass ein Abspülen mit Wasser nur eingeschränkt möglich ist. Eine zusätzliche manuelle Reinigung mittels des Handschuheingriffs, ggf. unterstützt durch Ausblasen mit Druckluft ist nur eingeschränkt möglich, da der Bewegungsfreiraum des Benutzers von außen in das geschlossene Gehäuse hinein begrenzt ist. Der Zugriffs- und Reinigungsaufwand ist hoch, was die Wirtschaftlichkeit der Anordnung einschränkt.

Aus der WO 2005/000367 A2 ist eine Anordnung zur Dekontamination von kontaminierten Postversandstücken bekannt. Die Anordnung umfasst ein feststehendes Gehäuse mit einer darin angeordneten Verarbeitungseinrichtung, nämlich mit einem Dekontaminiersystem für die Postversandstücke. Des Weiteren umfasst die Anordnung einen davon separaten, auf Rollen andockbaren Isolator. Im Isolator erfolgt zunächst eine Vorsortierung der Postversandstücke, wozu der Isolator Handhabungseinrichtungen in Form von Handschuheingriffen aufweist. Die dort vorbehandelten und vorsortierten Postversandstücke werden in einem Korb durch eine Schleuse in das feststehende Dekontaminiersystem gebracht und dort dekontaminiert. Mit den Handhabungseinrichtungen des Isolators ist ein direkter Zugriff auf den Innenraum des Dekontaminiersystems nicht möglich.

Der Erfindung liegt die Aufgabe zugrunde, eine gattungsgemäße Anordnung derart weiterzubilden, dass mit vereinfachten Mitteln ein wirkungsvollerer Zugriff des Bedienpersonals auf den Innenraum des geschlossenen Gehäuses und die darin angeordnete Verarbeitungseinrichtung möglich ist.

Diese Aufgabe wird durch eine Anordnung mit den Merkmalen des Anspruchs 1 gelöst.

Hierzu wird eine Anordnung vorgeschlagen, bei der das Gehäuse eine Zugriffstür aufweist. Außerdem ist eine eigenständige, mobile und vom Gehäuse separate Manipulationseinheit mit einem Teilraum vorgesehen, wobei zumindest ein Teil der Handhabungseinrichtungen im Teilraum angeordnet ist. Des Weiteren sind Dichtmittel insbesondere an der Manipulationseinheit zum Andocken der Manipulationseinheit an das Gehäuse vorgesehen, die im angedockten Zustand die Zugriffstür dicht umgreifen, und die bei geöffneter Zugriffstür den Innenraum des Gehäuses und den Teilraum der Manipulationseinheit gemeinsam gegenüber der Umgebung abdichten. Zumindest ein Teil der erforderlichen Handhabungseinrichtungen ist demnach nicht im geschlossenen Gehäuse, sondern in der separaten Manipulationseinheit angeordnet. Diese Handhabungseinrichtungen befinden sich also während des Produktions- bzw. Verarbeitungsprozesses nicht im Prozessraum. Sie werden also nicht mit den verarbeiteten Stoffen belastet. Außerdem sind sie weder konstruktiv noch prozessual im Weg, so dass erhöhte Freiheiten beim Anordnen, Montieren und Demontieren der Prozessaggregate bzw. der Verarbeitungseinrichtung bestehen.

Die separate Manipulationseinheit kann nach Bedarf für mehrere Maschinen wechselseitig eingesetzt werden, so dass der Investitionsaufwand verringert ist. Das Gehäuse mit der Verarbeitungseinrichtung braucht keine oder nur einen verringerten Teil der externen Anschlüsse beispielsweise für Spülwasser, Druckluft, Abluft und Abwasser, womit auch entsprechend aufwendige Absperrmaßnahmen hierfür entfallen.

Bei Bedarf kann jedoch die Manipulationseinheit an das jeweilige Gehäuse mit der Verarbeitungseinrichtung angedockt werden. Die Manipulationseinheit kann dabei ohne Rücksicht auf den Verarbeitungsprozess hinsichtlich verbesserter Eingriffsmöglichkeiten optimiert sein, so dass der Reinigungsprozess oder andere Formen des Zugriffs erleichtert sind.

Insgesamt ist eine einfach und wirksam handhabbare, praxistaugliche Anordnung geschaffen, die sowohl auf Seiten der Verarbeitungsmaschine durch Wegfall von Handhabungseinrichtungen und äußeren Anschlüssen, als auch auf Seiten der Manipulationseinheit durch Mehrfachverwendbarkeit an verschiedenen Maschinen eine deutliche Investitionseinsparung und ein kostengünstigeren Verarbeitungsablauf zur Folge hat.

In bevorzugter Weiterbildung sind die Dichtmittel als Faltenbalg mit einem geschlossen umlaufenden Dichtrand ausgebildet. Bei Bedarf wird die mobile Manipulationseinheit an die jeweilige Verarbeitungsmaschine herangeschoben und im gewünschten Abstand positioniert. Auf eine exakte Abstandspositionierung kommt es jedoch nicht an, da Abstandsdifferenzen und auch seitliche Fluchtdifferenzen ohne weiteres durch den elastischen Faltenbalg ausgeglichen werden können. Darüber hinaus eröffnet der Faltenblag die Möglichkeit, während des laufenden Eingriffs den Abstand der Handhabungseinrichtung zur Verarbeitungseinrichtung nach Bedarf zu variieren.

Die Handhabungseinrichtungen umfassen mindestens einen Handschuheingriff, eine Spülwasserzufuhr, eine Druckluftzufuhr und/oder eine Absaugung. In einer bevorzugten Ausführungsform umfassen die Handhabungseinrichtungen eine Abwasserableitung und/oder eine Abluftableitung. Hiermit lassen sich die wichtigsten Eingriffs- und Reinigungsaufgaben zuverlässig lösen. Selbst hartnäckige pulverförmige Stoffe wie feinkörnige Medikamente können durch Spülen, Ausblasen, manuelles Reiben und dergleichen zuverlässig entfernt werden.

In zweckmäßiger Weiterbildung weist die Manipulationseinheit eine flexible Wand auf, an der mindestens eine Handhabungseinrichtung, insbesondere der Handschuheingriff angeordnet ist. Der Benutzer greift hierbei von außen in den Handschuheingriff ein, wodurch er einen geschützten Zugriff auf den Innenraum des Gehäuses hat. Durch gezielten Handdruck in den Handschuheingriff oder gegen die flexible Wand verformt sich die flexible Wand in den Innenraum hinein, so dass die Reichweite des Benutzers vergrößert wird und auch weiter entfernt liegende bzw. ungünstig liegende Stellen des Innenraums erreicht werden können.

In einer bevorzugten Ausgestaltung ist die Manipulationseinheit mit Laufrollen versehen, auf denen die Manipulationseinheit rollend verschoben werden kann. Zweckmäßig ist die Manipulationseinheit höhenverstellbar. Während des laufenden Betriebes einer oder mehrerer Verarbeitungseinheiten ist die Manipulationseinheit nicht im Wege, kann jedoch bei Bedarf von Hand an die jeweilige Verarbeitungseinheit herangerollt, in der Höhe angepasst und angedockt werden. Ebenso leicht lässt sich die Manipulationseinheit nach Beendigung des Eingriffs wieder entfernen und beiseite rollen, so dass der Verarbeitungsvorgang ungestört fortgesetzt werden kann.

Die Zugriffstür ist vorteilhaft als kombinierte Schwenk- und Einschubklappe ausgebildet. Insbesondere in Verbindung mit dem Faltenbalg der Manipulationseinheit kann die Zugrifftür bei angedockter Manipulationseinheit großformatig aufgeklappt werden, wozu der ausgefahrene Faltenbalg unter Beibehaltung seiner Dichtfunktion hinreichend Raum zur Verfügung stellt. Anschließend wird die Zugriffstür lateral in den Innenraum des Gehäuses eingeschoben, so dass sie nicht oder nicht wesentlich über die Außenfläche des Gehäuses hervorsteht. Die Manipulationseinheit kann dann im angedockten und abgedichteten Zustand näher an das Gehäuse herangeschoben werden, wobei sich der Faltenbalg zusammendrückt. Hierdurch gelangt der

Benutzer näher an den Innenraum des Gehäuses und die darin angeordnete Verarbeitungseinrichtung, was den Zugriff darauf erleichtert.

Ein Ausführungsbeispiel der Erfindung ist nachfolgend anhand der Zeichnung näher beschrieben. Es zeigen:
- Fig. 1: in einer schematischen Darstellung eine Verarbeitungseinheit für kontaminationsgefährdende Stoffe mit einem Gehäuse, in dessen Innenraum eine angedeutete Verarbeitungseinrichtung angeordnet ist;
- Fig. 2: die Anordnung nach Fig. 1 mit geschlossener Beladungstür und geöffneter Zugriffstür;
- Fig. 3: die Anordnung nach den Fig. 1 und 2 mit geschlossenen Türen während des Verarbeitungsvorganges;
- Fig. 4: in einer perspektivischen Schemadarstellung eine erfindungsgemäß ausgeführte Manipulationseinheit für den bedarfsweisen Zugriff auf den Innenraum der Verarbeitungseinheit nach den Fig. 1 bis 3;
- Fig. 5: die Verarbeitungseinheit nach den Fig. 1 bis 3 nach Beendigung des Verarbeitungsvorganges mit kontaminierter Verarbeitungseinrichtung und heran gerollter Manipulationseinheit nach Fig. 4;
- Fig. 6: die Anordnung nach Fig. 5 mit angedockter Manipulationseinheit und aufgeklappter Zugriffstür;
- Fig. 7: die Anordnung nach Fig. 6 mit in den Innenraum des Gehäuses eingeschobener Zugriffstür und näher an das Gehäuse heran gerollter Manipulationseinheit zur Reinigung des Gehäuseinnenraumes;
- Fig. 8: die Verarbeitungseinheit nach den vorhergehenden Figuren im gereinigten Zustand mit entfernter Manipulationseinheit bei der Entnahme der in einem abgesiegelten, äußerlich gereinigten Foliensack enthaltenen Verarbeitungseinrichtung.

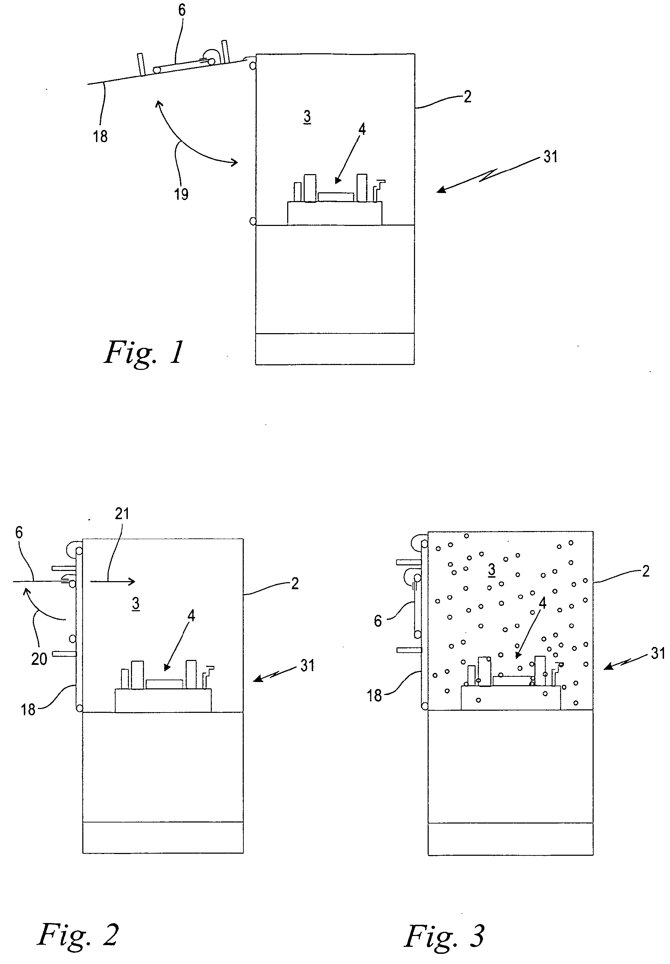

Fig. 1 zeigt in einer schematischen Seitenansicht eine Verarbeitungseinheit 31 zur Verarbeitung von kontaminationsgefährdenden Stoffen 1, wie sie im Zusammenhang mit den Fig. 3 und 5 bis 8 beschrieben sind. Die Verarbeitungseinheit 31 umfasst ein Gehäuse 2, in dessen Innenraum 3 eine Verarbeitungseinrichtung 4 angeordnet werden kann. Das Gehäuse 2 ist mit einer Beladungstür 18 versehen, die entsprechend einem Doppelpfeil 19 auf- und zugeschwenkt werden kann. Im geöffneten Zustand der Beladungstür 18 kann die Verarbeitungseinrichtung 4 in den Innenraum 3 des Gehäuses 2 verbracht und dort für den späteren Verarbeitungsvorgang eingerichtet werden.

Darüber hinaus ist an der Beladungstür 18 noch eine kleinere Zugriffstür 6 angebracht die in Fig. 1 geschlossen dargestellt ist. Fig. 2 zeigt die Anordnung nach Fig. 1 mit geschlossener Beladungstür 18, wobei jedoch die Zugriffstür 6 teilweise geöffnet ist. Die Zugriffstür 6 ist im gezeigten Ausführungsbeispiel als kombinierte Schwenk- und Einschubklappe ausgebildet. Für eine vollständige Öffnung wird die Zugriffstür 6 zunächst entsprechend einem Pfeil 20 ausgehend von der geschlossenen Position nach Fig. 1 hochgeklappt und anschließend entsprechend einem Pfeil 21 in den Innenraum 3 des Gehäuses 2 hineingeschoben. Hierdurch ist ein Zugriff auf den Innenraum 3 und die darin angeordnete Verarbeitungseinrichtung 4 seitens des Bedienpersonals möglich.

Fig. 3 zeigt die Anordnung nach den Fig. 1 und 2 im Betrieb während der Verarbeitung eines kontaminationsgefährdenden Stoffes 1. Bei dem Stoff 1 kann es sich um eine Flüssigkeit und insbesondere um ein feinkörniges Pulver handeln und dabei beispielsweise toxische Eigenschaften aufweisen. Im gezeigten Ausführungsbeispiel handelt es sich um ein hochwirksames, niedrig dosiertes pharmazeutisches Wirkstoffpräparat in Form eines feinen Pulvers, wobei die Verarbeitungseinrichtung 4 beispielhaft eine Abmess- und Abfülleinrichtung ist, mittels derer der Stoff 1 dosiert und in Kapseln, Blisterverpackungen oder dergleichen abgefüllt wird. Eine geringe Teilmenge des Stoffes 1 wird dabei aufgewirbelt, verteilt sich im Innenraum 3 des Gehäuses 1 und setzt sich an dessen Innenwänden sowie an der Verarbeitungseinrichtung 4 ab, wie dies schematisch in Fig. 3 dargestellt ist.

Zum Schutz des Bedienpersonals vor Kontamination mit dem Stoff 1 ist das Gehäuse 1 insgesamt geschlossen, wobei während des Bearbeitungsprozesses sowohl die Beladungstür 18 als auch die Zugriffstür 6 entsprechend der Darstellung nach Fig. 3 geschlossen sind. Die geschlossene Ausgestaltung des Gehäuses 2 bedeutet insbesondere, dass ein Austritt des Stoffes 1 aus dem Innenraum 3 heraus nach außen wirksam unterbunden ist. Kleinere Undichtigkeiten des Gehäuses 2, insbesondere im Bereich der Beladungstür 18, der Zugriffstür 6 und von nicht dargestellten beweglichen Übertragungseinrichtungen wie Wellen oder dgl. werden dadurch berücksichtigt, dass im Innenraum 3 gegenüber der Umgebung ein geringer Unerdruck herrscht. Sofern Undichtigkeiten vorhanden sind, dringt hierdurch in Folge der anliegenden Druckdifferenz Luft von außen in den Innenraum 3 ein, wobei der aufgewirbelte Stoff 1 nicht gegen den sich einstellenden Luftstrom nach außen vordringen kann.

Gelegentlich ist ein Zugriff auf den Innenraum 3 und die darin angeordnete Verarbeitungseinrichtung 4 seitens des Bedienpersonals erforderlich, ohne dass die vorstehend erläuterte Dichtigkeit und damit der Kontaminationsschutz aufgegeben wird. Ein solcher Zugriff kann beispielsweise dann erforderlich werden, wenn Korrekturen am laufenden Verarbeitungsprozess bzw. an der Verarbeitungseinrichtung 4 erforderlich werden, oder wenn im Anschluss an einen abgeschlossenen Verarbeitungsprozess eine innenseitige Reinigung des Gehäuses 2 und der Verarbeitungseinrichtung 4 von Rückständen des Stoffes 1 durchgeführt werden muss.

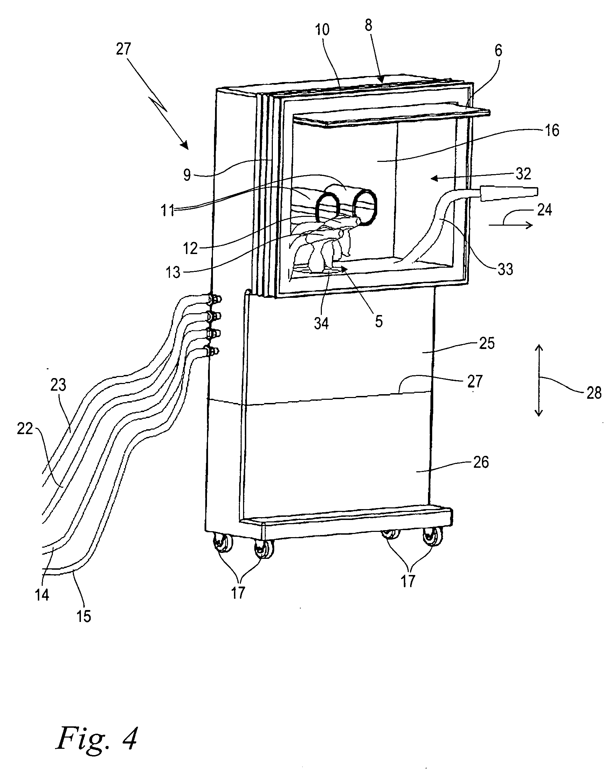

Hierzu ist nach der Erfindung eine Manipulationseinheit 7 vorgesehen, die schematisch in der perspektivischen Darstellung nach Fig. 4 gezeigt ist. Demnach handelt es sich um eine eigenständige, mobile, und von der Verarbeitungseinrichtung 31 (Fig. 1 bis 3) bzw. dessen Gehäuse 2 separat ausgebildete Manipulationseinheit 7 mit Handhabungseinrichtungen 5 für den benutzerseitigen Zugriff auf den Innenraum 3 und die darin angeordnete Verarbeitungseinrichtung 4 (Fig. 3). Neben den Handhabungseinrichtungen 5 weist die Manipulationseinheit 7 auch Dichtmittel auf, die im gezeigten Ausführungsbeispiel als im Querschnitt rechteckiger Faltenbalg 9 mit einem umlaufenden, rahmenförmigen Dichtrand 10 ausgebildet sind. Die Dichtmittel können auch ganz oder teilweise am Gehäuse 2 angeordnet sein und sind dazu vorgesehen, die Manipulationseinheit 7 bei Bedarf an das Gehäuse 2 (Fig. 3) anzudocken, wobei der Dichtrand 10 im angedockten Zustand die Zugriffstür 6 bzw. deren Türöffnung dicht umschließt.

Durch den Faltenbalg 9 mit dem Dichtrand 10 und eine gegenüber dem Dichtrand 10 zurückversetzte flexible Wand 16 ist ein Teilraum 32 begrenzt, der lediglich zum Dichtrand 10 hin offen und im Übrigen geschlossen ist. Im angedockten Zustand der Manipulationseinheit 7 an das Gehäuse 2 und bei geöffneter Zugriffstür 6 gehen der Teilraum 32 der Manipulationseinheit 7 und der Innenraum 3 des Gehäuses 2 ineinander über und bilden einen gemeinsamen Raum, der mittels der Dichtmittel gegenüber der Umgebung abgedichtet ist. Innerhalb des Teilraumes 32 ist zumindest ein Teil der Handhabungseinrichtungen 5 angeordnet, die im gezeigten Ausführungsbeispiel eine Spülwasserzufuhr 12, eine Druckluftzufuhr 13, eine Abwasserableitung 14, eine Abluftleitung 15, eine Absaugung 33, einen Abfluss 34 sowie mindestens einen, hier ein Paar von in die flexible Wand 16 eingelassenen Handschuheingriffen 11 umfassen. Die Abwasserableitung 14 und die Abluftableitung 15 umfassen zugehörige flexible Schlauchleitungen, die von der Manipulationseinheit 7 fortführen und in geeigneter Weise an nicht dargestellte Entsorgungseinrichtungen angeschlossen sind. Darüber hinaus führen eine Spülwasserleitung 22 und eine Druckluftleitung 23 ebenfalls in Form von flexiblen Schläuchen in die Manipulationseinheit 7 hinein und versorgen die Spülwasserzufuhr 12 und die Druckluftzufuhr 13 mit angedeuteten Pistolengriffen mit dem jeweiligen Medium.

Die Manipulationseinheit 7 ist mit Laufrollen 17 versehen, auf denen sie rollend von Hand verschoben werden kann. Die an ihrer jeweiligen Versorgungs- bzw. Entsorgungseinrichtung angeschlossene, flexible Abwasserleitung 14, Abluftleitung 15, Spülwasserleitung 22, Druckleitung 23 und ggf. auch eine nicht dargestellte elektrische Stromversorgungsleitung erlauben dabei im angeschlossenen Zustand eine nahezu unbegrenzte Verschiebbarkeit der Manipulationseinheit 7 auf den Laufrollen 17. Darüber hinaus ist die Manipulationseinheit 7 in ein Unterteil 26 und ein Oberteil 25 aufgeteilt, wobei das Oberteil 25 entlang einer schematisch angedeuteten Trennlinie 27 an das Unterteil 26 angrenzt, und wobei das Oberteil 25 mit den Handhabungseinrichtungen 5 gegenüber dem Unterteil 26 entsprechend einem Doppelpfeil 28 höhenverstellbar ist.

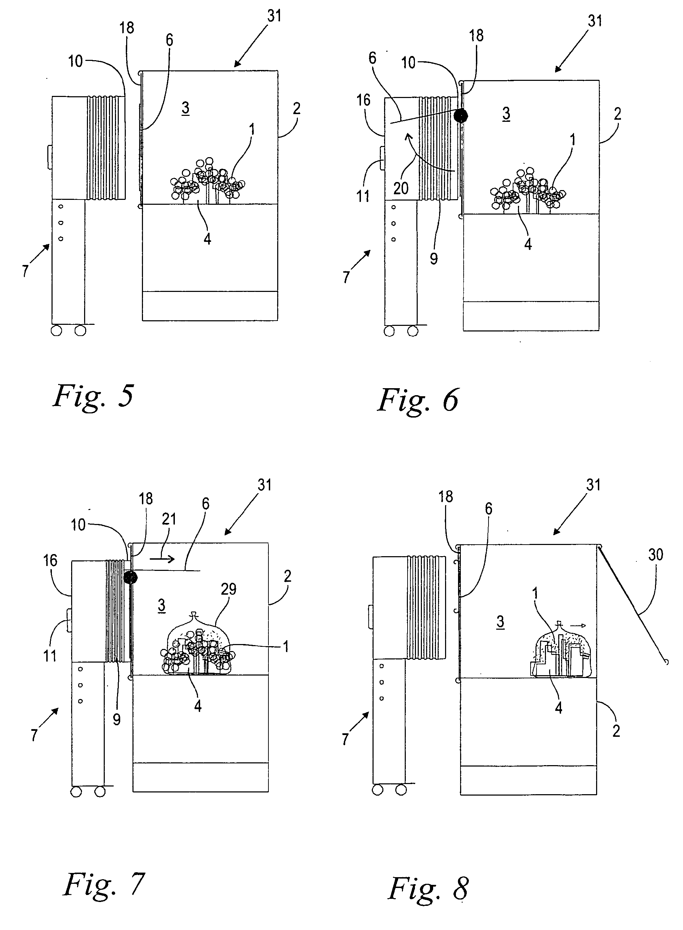

Fig. 5 zeigt die Verarbeitungseinheit 31 nach Fig. 3 bei unterbrochenem Verarbeitungsvorgang bzw. nach Beendigung eines solchen. Die im Innenraum 3 des Gehäuses 2 angeordnete Verarbeitungseinrichtung 4 ist mit Resten des Stoffes 1 kontaminiert, wie dies schematisch dargestellt ist. Sinngemäß das Gleiche gilt auch für die Innenwände des Gehäuses 2. Die Beladungstür 18 und die Zugriffstür 6 sind weiterhin verschlossen. Zur Reinigung des Gehäuses 2 im Bereich seines Innenraumes 3 und der Verarbeitungseinrichtung 4 wird die Manipulationseinheit 7 an die Verarbeitungseinheit 31 herangeschoben und in der Höhe derart eingestellt, dass die Dichtrand 10 in Überdeckung mit der Zugriffstür 6 liegt.

Fig. 6 zeigt die Anordnung nach Fig. 5, demnach die Manipulationseinheit 7 an die Verarbeitungseinheit 31 derart angedockt ist, dass der Dichtrand 10 die Zugriffstür 6 bzw. deren Türöffnung dichtend umschließt. Der Faltenbalg 9 ist in axialer Horizontalrichtung so weit ausgefahren, dass die Zugriffstür 6 entsprechend dem Pfeil 20 in den Teilraum 32 hinein aufgeklappt werden kann, ohne mit der flexiblen Wand 16 zu kollidieren, wie dies auch in Fig. 4 angedeutet ist. In diesem angedockten Zustand bilden der Teilraum 32 (Fig. 4) und der Innenraum 3 einen dicht geschlossenen und gegenüber der Umgebung abgedichteten Gesamtraum, der den außen stehenden Benutzer vor einer Kontamination mit dem Stoff 1 schützt.

Nachfolgend wird die Zugriffstür 6 entsprechend der Darstellung nach Fig. 7 in Richtung des Pfeils 21 in den Innenraum 3 hineingeschoben. Gleichzeitig wird die Manipulationseinheit 7 in der gleichen Richtung näher an die Verarbeitungseinheit 31 herangerollt, wobei sich der Faltenbalg 9 zusammendrückt. In diesem in Fig. 7 dargestelltem Zustand hat das Bedienpersonal Zugriff auf den Innenraum 3 und die darin angeordnete Verarbeitungseinrichtung 4 beispielsweise mittels des Handschuheingriffes 11. Nach Bedarf kann der Benutzer die flexible Wand 16 mit dem daran befestigten Handschuheingriff 11 (Fig. 4) in den Innenraum 3 hineindrücken, um die Zugänglichkeit sämtlicher Bereiche des Innenraums 3 und der Verarbeitungseinrichtung 4 zu verbessern. Der Benutzer kann mittels des mindestens einen Handschuheingriffs 11 beispielsweise die Spülwasserzufuhr 12, die Druckluftzufuhr 13 und/oder, wie beispielhaft in Fig. 4 gezeigt, die Absaugung 33 ergreifen, aus ihren Halterungen in der Manipulationseinheit 7 entsprechend einem Pfeil 24 herausziehen (Fig. 4), und eine Reinigung im Bereich des Innenraumes 3 vornehmen. Ergänzend kann auch eine manuelle Reinigung durch Putzen mit einem Lappen oder dergleichen vorgenommen werden. Optional besteht noch die Möglichkeit, vereinzelte Komponenten wie die hier angedeutete Verarbeitungseinrichtung 4 in einen geschlossenen Foliensack 29 zu verbringen, sofern eine hinreichende Reinigungsqualität von Resten des anhaftenden Stoffes 1 nicht sichergestellt werden kann. Hierbei wird dann lediglich eine Reinigung-der Außenseite des Foliensackes 29 vorgenommen.

Gegen Beendigung des Reinigungsvorganges oder anderer Eingriffe wird die Zugriffstür 6 geschlossen, von außen zur Vermeidung einer Kontaminationsverschleppung in den Teilraum 32 hinein abgereinigt und die Manipulationseinheit 7 entfernt, wie dies in Fig. 8 dargestellt ist. Der Innenraum 3 ist in diesem Zustand gesäubert. Optional kann eine rückwärtige Klappe 30 oder auch die Beladungstür 18 geöffnet werden, um die Verarbeitungseinrichtung 4 ggf. zusammen mit dem Foliensack 29 zu entnehmen und einer ergänzenden Reinigung zuzuführen. Im Anschluss daran kann diese oder eine andere Verarbeitungseinrichtung 4 entsprechend der Darstellung nach Fig. 1 im Innenraum 3 des Gehäuses 2 platziert werden, woraufhin mit dem Verarbeitungsvorgang des Stoffes 1 erneut begonnen bzw. fortgefahren werden kann.

Die Manipulationseinheit 7 kann nicht nur für eine einzige, hier gezeigte Verarbeitungseinheit 31, sondern für eine Vielzahl davon verwendet werden. Ihre durch die Laufrollen 17 (Fig. 4) sichergestellte Mobilität ermöglicht es, die gleiche Manipulationseinheit 7, ggf. in ihrer Höhe angepasst, an verschiedenen Verarbeitungseinheiten 31 einzusetzen.

## Patentansprüche

1. Anordnung zur Verarbeitung von kontaminationsgefährdenden Stoffen (1), umfassend ein geschlossenes Gehäuse (2), in dessen Innenraum (3) eine Verarbeitungseinrichtung (4) für die kontaminationsgefährdenden Stoffe (1) angeordnet ist, sowie Handhabungseinrichtungen (5), wobei das Gehäuse (2) eine Zugriffstür (6) aufweist, wobei die Anordnung eine eigenständige, mobile, und vom Gehäuse (2) separate Manipulationseinheit (7) mit einem Teilraum (32) umfasst, wobei zumindest ein Teil der Handhabungseinrichtungen (5) im Teilraum (32) angeordnet ist, und wobei Dichtmittel zum Andocken der Manipulationseinheit (7) an das Gehäuse (2) vorgesehen sind, die im angedockten Zustand die Zugriffstür (6) dicht umgreifen, und die bei geöffneter Zugriffstür (6) den Innenraum (3) des Gehäuses (2) und den Teilraum (32) der Manipulationseinheit (7) gemeinsam gegenüber der Umgebung abdichten, wobei die Handhabungseinrichtungen (5) mindestens einen Handschuheingriff (11), eine Spülwasserzufuhr (12), eine Druckluftzufuhr (13) und/oder eine Absaugung (33) umfassen,
**dadurch gekennzeichnet, dass** im Teilraum (32) der separaten Manipulationseinheit (7) die Handhabungseinrichtungen (5) für den benutzerseitigen Zugriff auf den Innenraum (3) und die darin angeordnete Verarbeitungseinrichtung (4) derart angeordnet sind, dass der Benutzer mittels des mindestens einen Handschuheingriffs (11), der Spülwasserzufuhr (12), der Druckluftzufuhr (13) und/oder der Absaugung (33) eine Reinigung im Bereich des Innenraumes (3) vornehmen kann.

2. Anordnung nach Anspruch 1,
**dadurch gekennzeichnet, dass** die Dichtmittel als Faltenbalg (9) mit einem geschlossen umlaufenden Dichtrand (10) ausgebildet sind.

3. Anordnung nach Anspruch 1 oder 2,
**dadurch gekennzeichnet, dass** die Handhabungseinrichtungen (5) eine Abwasserableitung (14) und/oder eine Abluftableitung (15) umfassen.

4. Anordnung nach einem der Ansprüche 1 bis 3,
**dadurch gekennzeichnet, dass** die Manipulationseinheit (7) eine flexible Wand (16) aufweist, an der mindestens eine Handhabungseinrichtung (5), insbesondere der mindestens eine Handschuheingriff (11) angeordnet ist.

5. Anordnung nach einem der Ansprüche 1 bis 4,
**dadurch gekennzeichnet, dass** die Manipulationseinheit (7) mit Laufrollen (17) versehen ist, auf denen die Manipulationseinheit (7) rollend verschoben werden kann.

6. Anordnung nach einem der Ansprüche 1 bis 5,
**dadurch gekennzeichnet, dass** die Manipulationseinheit (7) höhenverstellbar ist.

7. Anordnung nach einem der Ansprüche 1 bis 6,
**dadurch gekennzeichnet, dass** die Zugriffstür (6) als kombinierte Schwenk- und Einschubklappe ausgebildet ist.

## Claims

1. Assembly for processing materials (1) at risk of contamination, comprising a closed housing (2), in the interior (3) of which a processing device (4) for the materials (1) at risk of contamination is located, and handling devices (5), wherein the housing (2) has an access door (6),
wherein the assembly comprises an independent, mobile manipulation unit (7), which is separate from the housing (2) and has a sub-chamber (32), wherein at least a part of the handling device (5) is located in the sub-chamber (32), and wherein sealing means are provided for docking the manipulation unit (7) to the housing (2), which sealing means tightly encompass the access door (6) in the docked state and seal the interior (3) of the housing (2) together with the sub-chamber (32) of the manipulation unit (7) against the environment when the access door (6) is open, wherein the handling devices (5) comprise at least one glove port (11), a flush water supply (12), a compressed air supply (13) and/or an extraction (33),
**characterised in that**, in the sub-chamber (32) of the separate manipulation unit (7), the handling devices (5) for user access to the interior (3) and the processing device (4) are arranged in such a way that the user can clean the interior (3) by means of the at least one glove port (11), the flush water supply (12), the compressed air supply (13) and/or the extraction (33).

2. Assembly according to claim 1,
**characterised in that** the sealing means are designed as a bellows (9) with a continuous closed sealing edge (10).

3. Assembly according to claim 1 or 2,
**characterised in that** the handling devices (5) comprise a waste water discharge (14) and/or an exhaust air discharge (15).

4. Assembly according to any of claims 1 to 3,
**characterised in that** the manipulation unit (7) has a flexible wall (16), on which at least one handling device (5), in particular the at least one glove port (11), is located.

5. Assembly according to any of claims 1 to 4,
**characterised in that** the manipulation unit (7) is provided with castors (17), on which the manipulation unit (7) can be moved by rolling.

6. Assembly according to any of claims 1 to 5,
**characterised in that** the manipulation unit (7) is vertically adjustable.

7. Assembly according to any of claims 1 to 6,
**characterised in that** the access door (6) is designed as a combined swivel and insert flap.

## Revendications

1. Dispositif de traitement de matières présentant un danger de contamination (1), comprenant un boîtier fermé (2) dans l'espace intérieur (3) duquel est disposé un dispositif de traitement (4) pour les matières présentant un risque de contamination (1), ainsi que des dispositifs de maniement (5), étant précisé que le boîtier (2) comporte une porte d'accès (6), que le dispositif comprend une unité de manipulation (7) indépendante, mobile et séparée du boîtier (2), avec un espace partiel (32), qu'une partie au moins des dispositifs de maniement (5) sont disposés dans l'espace partiel (32), et qu'il est prévu des moyens d'étanchéité qui sont destinés à l'accouplement de l'unité de manipulation (7) au boîtier (2), qui, à l'état accouplé, entourent de manière étanche la porte d'accès (6) et qui, quand la porte d'accès (6) est ouverte, réalisent l'étanchéité du boîtier (2) et de l'espace partiel (32) de l'unité de manipulation (7), conjointement, par rapport à l'environnement, et que les dispositifs de manipulation (5) comprennent au moins un dispositif d'emboîtement pour gant (11), une amenée d'eau de rinçage (12), une amenée d'air comprimé (13) et/ou une aspiration (33),
**caractérisé en ce que** dans l'espace partiel (32) de l'unité de manipulation séparée (7), les dispositifs de maniement (5) pour l'accès, côté utilisateur, à l'espace intérieur (3) et au dispositif de traitement (4) disposé dans celui-ci sont disposés de telle sorte que l'utilisateur puisse procéder au nettoyage dans la zone de l'espace intérieur (3) à l'aide du ou des dispositifs d'emboîtement pour gants (11), de l'amenée d'eau de rinçage (12), de l'amenée d'air comprimé (13) et/ou de l'aspiration (33).

2. Dispositif selon la revendication 1,
**caractérisé en ce que** les moyens d'étanchéité sont conçus comme un soufflet (9) avec un bord d'étanchéité (10) fermé sur lui-même.

3. Dispositif selon la revendication 1 ou 2,
**caractérisé en ce que** les dispositifs de maniement (5) comprennent une évacuation d'eau usée (14) et/ou une évacuation d'air sortant (15).

4. Dispositif selon l'une des revendications 1 à 3,
**caractérisé en ce que** l'unité de manipulation (7) comporte une paroi flexible (16) sur laquelle est disposé au moins un dispositif de maniement (5), en particulier le ou les dispositifs d'emboîtement pour gant (11).

5. Dispositif selon l'une des revendications 1 à 4,
**caractérisé en ce que** l'unité de manipulation (7) est pourvue de roulettes (17) sur lesquelles elle peut être déplacée par roulement.

6. Dispositif selon l'une des revendications 1 à 5,
**caractérisé en ce que** l'unité de manipulation (7) est réglable en hauteur.

7. Dispositif selon l'une des revendications 1 à 6,
**caractérisé en ce que** la porte d'accès (6) est conçue comme un volet pivotant et coulissant combiné.
